# EUROPEAN PATENT APPLICATION

(11) **EP 4 586 146 A1**
(43) Date of publication of application: **16.07.2025**
(21) Application number: 24151878.6
(22) Date of filing: 15.01.2024
(51) Int. Cl.: G06N 3/065, G06N 3/096

(54) **PROCESSOR FOR PROCESSING AN ARTIFICIAL NEURAL NETWORK OPERATION**

(71) Applicant: Fraunhofer-Gesellschaft zur Förderung der angewandten Forschung e.V., 80686 München (DE)
(72) Inventor: BREILING, Marco, 91058 Erlangen (DE); KUNDU, Bijoy, 91058 Erlangen (DE); MALLAH, Maen, 91058 Erlangen (DE); MÜLLER, Roland, 91058 Erlangen (DE)
(74) Representative: Pfitzner, Hannes

(57) **Abstract**

Processor (10) for processing an artificial neural network operation, comprising: a crossbar (12) comprising a plurality of crossbar (12) array entities, each crossbar (12) array entity comprising at least one synapse node (20), the at least one synapse node (20) is configured to be operated in a first synapse mode (m1) having one or more stored first weights, and in a second synapse mode (m2) using one or more second weights and/or in a third synapse mode (m3) using one or more fixed (stored) third weights; wherein the first synapse mode (m1) and the second synapse mode (m2) and the third synapse mode (m3) differ from each other with respect to a storing of the one or more weights as the stored first weights or second weights or third weights.

## Description

Embodiments of the present invention refer to a processor for processing an artificial neural network operation and to a corresponding method and computer program. The preferred embodiments refer to an analog ANN accelerator using a mixture of hardware and programmable weights.

Artificial Neural Networks (ANNs) can be calculated on server computers, personal computers as well as micro-controllers inside embedded devices. However, conventional CPUs (Central Processing Units) as used in all three kinds of devices have been designed with conventional applications in mind. ANNs differ from these applications in several aspects: they exhibit many (up to millions) parallel computations, they need excessive amounts of data (inputs called "features", parameters like weights, and output features that are calculated by combining both) in the same order of magnitude as the number of parallel computations, and their control flow is largely linear, i.e., no or rare branching events occur (typically expressed by "if'-statements).

That is the reason why already many years ago, Graphics Processing Units (GPUs) became the main work horse for both the training and the inference of ANNs, as they had already been designed more suitable for each of the three aforementioned aspects compared to CPUs. However, still GPUs were designed with a different application in mind - namely graphics computations. Therefore, a new kind of hardware appeared in the mid 2010's - ANN hardware accelerators. They avoid the legacy from graphics processing and hence the overhead that GPUs bear because of their origin.

Almost all current-day ANN accelerators are fully digital. They typically contain an array of Processing Elements (PEs) that are able to store an input feature, a parameter/weight and/or a partial sum, to carry out a Multiply-Accumulate-Operation (MAC) between the stored value and an input in order to produce an output, and to forward the output to one or multiple other PEs or to some bus fabric. In some implementations, the connections between the PEs and those connecting the PEs to some bus fabric or memory are flexible, i.e., the inputs and outputs can be routed to selected PEs, in other cases, these connections are fixed, i.e., the data flows along fixed paths.

Such digital ANN accelerators can be realized as a hardware description ("bitfile") loaded into an FPGA (Field Programmable Gate Array) or as an Application-Specific Integrated Circuit (ASIC - i.e., a computer chip). Additionally, a piece of software is needed to operate them - the compiler - which maps the different functionalities and computations to the available hardware resources and defines the execution schedule for them. These hardware resources comprise among others the elements to move data around the chip, i.e., buses, bus fabrics, switches/routers etc., the elements to store intermediate or final results of the computations (i.e., storage/caches: block RAM or registers) and the elements to carry out the computations like the aforementioned PEs. Almost always, the number of computations to execute for a large ANN exceeds the number of compute resources (PEs) by far. This is due to the fact that a single computation lasts only a very short time after which the compute resource can be re-used for some other computation. Further, in most cases, the objective is to make the chip as cheap, i.e., small in silicon area, as possible by reducing the number of compute resources, therefore limiting the available compute resources. For instance, a large ANN might have 10⁹ computations per inference (i.e., per input dataset), but a chip to calculate 10 inferences per second might have only 100 PEs, such that any PE needs to carry out 10⁷ computations per inference or 10⁸ computations per second.

Besides these digital ANN accelerators, there exists a second category: mixed-signal ANN accelerators with an analog compute core [Sha16]. Only very few such accelerators have been developed worldwide at the time of writing.

Neural networks in almost every domain are growing exponentially in terms of parameters and activations, and especially in Computer Vision, and Natural Language Processing. For example, the ResNeXt101 model and the BERT Large model uses approximately 8 GB and 16 GB memory respectively (Gholami, 2021) to store parameters and features. The memory requirements of more recent models are much higher.

The increasing memory requirements translate to increased costs: the inference accelerator gets costlier due to more silicon area for the memory; the energy costs also increase due to more memory accesses and leakage currents. The cost sources are also interdependent in that off-chip memory like DRAM is relatively cheaper in silicon price than on-chip memory of same capacity like SRAM, but using off-chip DRAMs is relatively more expensive in terms of energy consumption than on-chip SRAMs in the order of 100x to 300x - mostly due to the energy needed for data transfers. However, often the on-chip SRAM size is limited by the chip size and as it can store significantly fewer bits per mm² than DRAM. Therefore, to support larger Neural Network models that require Gigabytes of memory, typically hierarchical memory architectures with a mix of off-chip and on-chip memories are employed to trade-off the silicon cost and energy consumption.

Even for on-chip memory, access to data requires significant energy due to (a) the access energy inside the memory component (e.g. the address decoder, the driving of word and bit lines in a block RAM) and (b) the energy for the data transfer between the memory and the place, where this data is processed. To reduce the energy costs of memory accesses, in-memory computing solutions are typically directed toward reducing the movement of parameter data by bringing the computation in the memory and reusing the parameter data (usually the weights) for multiple multiply-accumulate (MAC) computations with different input data. The memory types used by these in-memory solutions are either volatile like SRAMs (the term SRAM or SRAM cell is used synonymously to flip-flop / latch throughout this description), or non-volatile memories such as PCMs, RRAMs, FeFETs etc. (acronym: NV-RAM; instead the overarching term memristor can be used). Use of SRAMs in in-memory computing is mainly driven by their smaller size, reliability and ease of access - simpler read and write circuitry, while non-volatile memory use is driven by their non-volatility nature, where the weights are immediately available after power-up of the chip, whereas for SRAM, they first need to be written in the initial phase after power-up. Non-volatile memory needs to amortize the energy-hungry write operations as much as possible over many energy-efficient read accesses. This amortization becomes most beneficial when the weights do not need to be changed at all.

It is an objective of the present invention to provide a concept for an artificial neural network processing having an improved tradeoff between hardware requirements, flexibility and processing performance.

The objective is solved by the subject matter of the independent claims.

An embodiment provides a processor for processing an artificial neural network operation. The processor comprises as a central component a crossbar comprising a plurality of crossbar array entities. Each crossbar array entity comprises at least one synapse node. For example, the crossbar can be structured in columns and rows. In this case, the synapse node may be configured to link column and row, for example.

The at least one synapse node is configured to be operated
- in a first synapse mode having one or more stored first weights, and
- in a second synapse mode using one or more second weights and/or
- in a third synapse mode using one or more fixed (stored) third weights.

This means that the 1^{st} mode AND 2^{nd} mode, 1^{st} mode AND 3^{nd} mode, OR 1^{st} mode AND 2^{nd} mode AND 3^{rd} mode may be operated together.

This means that the first synapse mode can be combined with the second synapse mode or alternatively can be combined with the third synapse mode. Of course, a combination of all three synapse modes might be possible as well. The first synapse mode and the second synapse mode and the third synapse mode differ from each other with respect to a storing (type) of the one or more weights as stored first weights, stored second weights or stored third weights.

According to embodiments the first and/or second synapse modes are adapted to use a memory. This means that the synapse node may have access to a memory in the first and second synapse mode, e.g., a SRAM cell (general fully flexible weight memory) in a first synapse mode or a NV-RAM in the second synapse mode. Examples for a fully flexible weight memory are a DRAM cell, SRAM cell, flip-flop cell or latch cell. We use the expression "offline configurable weight memory" for such an NV-RAM, as the main purpose is that the writing of these memory cells occurs once ("offline") or rarely, compared to frequently ("online") as for SRAMs. In some configurations the second synapse mode may use the offline configurable weight memory, while the first synapse mode uses the fully flexible weight memory. In other words, this means that, according to embodiments, the synapse node to be used with the first and second mode comprises a memory like a fully flexible weight memory and/or offline configurable weight memory. According to embodiments the synapse node to be used with the third synapse mode may comprise one or more fixed, e.g., hardwired, ROM or EPROM, weights. For example, one hardwired weight may be used or a combination of hardwired weights may be used.

Embodiments of the present invention are based on the finding that for low energy consumption fixed weights are preferred; for example, the fixed weights may be hardwired in silicon, while the configuration can be made programmable. In one use case that is inspired by the transfer learning concept, the hardware processor uses both fixed and flexible weights, where the fixed weights never change, for example, while the rest of the weights are designed to be programmable after chip production. In this use case, the chip can be used for various use cases all belonging to the same use case family, such that part of the parameters, e.g. weights, are family-specific but independent from the specific use case. These weights can be hard-wired on the chip. Other parameters and weights are use-case specific. In order to use the chip for these use cases, these parameters and weights need to be programmed into fully flexible or offline configurable memory after the chip production. An advantage of this solution is the energy and area reduction of the synapse circuit if fixed weights, i.e., a hardwired implementation, can be achieved, especially in comparison to the energy and area used for a fully flexible synapse circuit using SRAM cells as weight memory. Due to the combination with another synapse mode, like the synapse mode using SRAM cells or in ReRAM, sufficient flexibility can be maintained while simultaneously achieving the energy and area reduction. Consequently, the energy consumption and complexity of the chip and especially the chip area requirements are reduced, while still a high performance can be achieved. Therefore, the processor designed for neural network operations is improved with regard to hardware requirements, flexibility and efficiency.

According to embodiments the crossbar may be implemented as a combination of a fully-flexible crossbar and/or a non-volatile crossbar and/or a hardwired crossbar and/or a mixed crossbar. Such a crossbar could, for example, comprise a combination of a fully-flexible crossbar array entity and/or a non-volatile crossbar array entity and/or a hardwired crossbar array entity and/or a mixed crossbar array entity.

According to embodiments the synapse node may comprise at least a memory to be used with at least one of the first or second or third synapse modes. Alternatively it may comprise at least two memories to be used with the first and second synapse mode. The two memories are of different type, e.g., one offline configurable memory and one fully flexible memory. All memories are configured to store weights.

According to embodiments the weights as stored in the memory or as fixed stored are used to weight a parameter to be processed by the artificial neural network.

According to embodiments the processor comprises a multiplexer configured for receiving a selection signal and for selecting a respective signal from a memory or the memories of the synapse mode, the memory or the memories used in accordance with the first and/or the second synapse mode. In other words, the multiplexer receives a selection signal and outputs the selected one out of the multiple input signals. Thus, the selection signal enables beneficially to select the stored weights. In case more than one fixed value is stored for the third synapse mode, the selection signal can be used to select one or more fixed stored weights. For example, two fixed weights may be used so that a selection can select one of those. The fixed stored weights can also be combined so as to select a third fixed value.

This means that according to embodiments the third synapse mode comprises a single fixed weight for processing a signal or multiple fixed weights for processing the signal. For example, a combination or selection of the one or more multiple fixed weights is selectable using the selection signal. This means that the selection signal is used to select the weight within one of the synapse modes. Thus, by use of the selection signal it is advantageously possible to select one weight.

According to further embodiments the processor may comprise a controller for the cross bar. The controller is configured to provide a control signal to select the respective first and/or second and/or third synapse mode in accordance with the control signal.

Regarding the crossbar it should be noted that, according to embodiments, it may be implemented as an analog circuit. By use of this, it is advantageously possible to directly process the operation using the weight, where the summation in each column/row is done simultaneously.

According to embodiments the processor comprises one or more DACs (digital to audio converters) at the input of the crossbar. For example, each row may comprise a DAC. At the output of the crossbar the processor might comprise one or more ADCs (analog to digital converters). According to embodiments the processor may comprise a multiplexer.

According to embodiments the crossbar may comprise a plurality of crossbar array entities which are arranged in at least two rows and at least two columns. Note, the crossbar array entities may be identical with respect to its type but may differ with respect to the used weight, e.g., a fixed weight.

According to embodiments at least two crossbar array entities of the crossbar are grouped into crossbar array entities of the array, also referred to as CAEs.

According to embodiments different crossbar array entities (CAEs), e.g., different AWEs grouped into different crossbar array entities CAE, are operable using different synapse modes out of the first and second and/or third synapse mode. For example, one crossbar array entity of one group of crossbar array entities grouped into a crossbar array entity CAE may be operable using the first or second synapse mode, wherein another crossbar array entity or another plurality of crossbar array entities grouped into another crossbar array entity CAE may be used with the third synapse mode. According to embodiments the crossbar is configured for updating and/or retraining the first or second mode for the processor (accelerators). Even if the processor may perform the learning/training task, in general, the accelerators simply take the weights that are output by some other computer (e.g. server), where the learning/training took place. Thus, the processor is configured for updating and/or retraining one or more weights of the stored first and/or second and/or third weights. According to embodiments the processor may be operated together with a mapper and/or a compiler configured to map trained weights for the third synapse mode into fixed-weight crossbars, crossbar array entities or synapse nodes during production of the processor, and to map a second set of trained weights into a memory or memories for the first and second synapse mode during the deployment of the processor.

According to embodiments the crossbar may be divided into into a first CAE and a second CAE, i.e., into two crossbar portions. Alternatively, the processor may comprise a further crossbar, so that two or more crossbars are available. According to embodiments the crossbar and the further crossbar or the first and second CAE of the crossbar (12) may be configured to be operated in different synapse modes out of the first and/or second and/or third synapse mode. For example, one crossbar may be operable using a first or second synapse mode, wherein the further crossbar may be operated with the third synapse mode or vice versa. This means that the crossbar and a further crossbar are operated using different modes. Additionally or alternatively, the crossbar and the further crossbar or the first and second CAE of the crossbar (12) may have different sizes or heterogeneous cross sizes.

According to embodiments the crossbar or crossbar CAEs may be used as two layers or stages, also referred to as layer stages, comprising at least a first and a second layer stage. In the first layer stage a crossbar is used in a third synapse mode, wherein in a second layer stage a crossbar is used in the first or second synapse mode. For example, the weights of these layers (which however could all belong to one and the same layer in principle) are used in series.

According to embodiments each synapse node may comprise at least two synapse circuits, wherein each synapse circuit is adapted for one of the synapse modes.

Another embodiment provides a method for processing an artificial neural network operation using a crossbar as discussed above. The method comprises the step of operating the crossbar in a first synapse mode and the second synapse mode and/or the third synapse mode.

According to further embodiments the method may comprise the step of training the first stored weights and/or second stored weights and/or third stored weights. Additionally or alternatively, the method may comprise the step of selecting the first and/or the second and/or the third synapse mode under the optimization target or for reducing power consumption and/or under the optimization target or reducing chip area or space.

According to another embodiment the method comprises the step of partitioning the crossbar into two parts or partitioning the crossbar into two parts, especially a shared part and an individual part or partitioning the crossbar into two parts, namely an individual part and a shared part, wherein the individual part is configured individually and separately for each use case or a data set and the shared part jointly over multiple use cases or data sets.

According to further embodiments the method may be computer implemented.

Below, embodiments of the present invention will subsequently be discussed referring to the enclosed figures, wherein
- Fig. 1a: show a block diagram of a synapse mode according to a basic embodiment;
- Fig. 1b: shows a block diagram of a synapse mode using a programmable resistor according to an embodiment;
- Fig. 2a: shows a block diagram of a so-called compute core, comprising a crossbar according to an embodiment;
- Fig. 2b: shows a schematic block diagram of a crossbar according to an embodiment;
- Fig. 2c: shows a schematic representation of a crossbar comprising a plurality of tiles/CAE (comprising a plurality of synapse nodes (/AWE)), (according to embodiments);
- Fig. 3: shows a schematic block diagram of a mixed signal accelerator according to an embodiment;
- Fig. 4: shows a schematic block diagram of a plurality of CAEs according to embodiments;
- Fig. 5: shows a schematic block diagram of a plurality of CAE to illustrate the interaction between the CAEs;
- Fig. 6a: shows a schematic block diagram of a crossbar according to further embodiments;
- Fig. 6b: shows a schematic block diagrams of compute cores, comprising crossbars according to further embodiments
- Fig. 7: shows a schematic representation of a chip layout for illustrating the reduced area consumption;
- Fig. 8: shows a schematic block diagram of a synapse circuit comprising a plurality of fixed weights according to embodiments.

Below embodiments of the present invention will subsequently be discussed referring to the enclosed figures, wherein identical reference numerals are provided to objects having an identical or similar function so that the description thereof is mutually applicable and/or interchangeable.

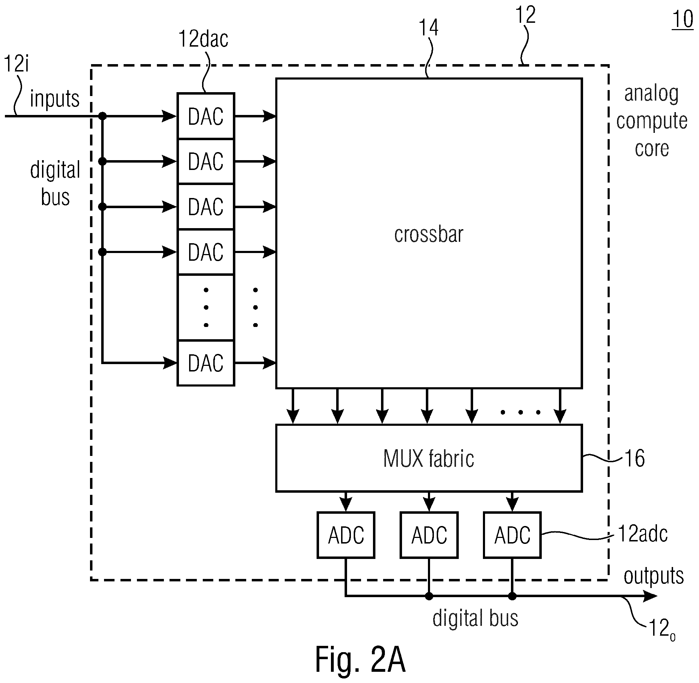

With respect to Figs. 2a to 2c a conventional structure of an ANN accelerator will be discussed, since embodiments of the present invention may use this conventional structure.

Fig. 2a shows a compute core also referred to as processor 10. The compute core 10 comprises an analog compute core 12 having input 12i, e.g., a digital input 12o, e.g., a digital output. A central component of the analog core 12 is the crossbar 14. According to embodiments, the crossbar 14 may be structured in rows and column as will be discussed below.

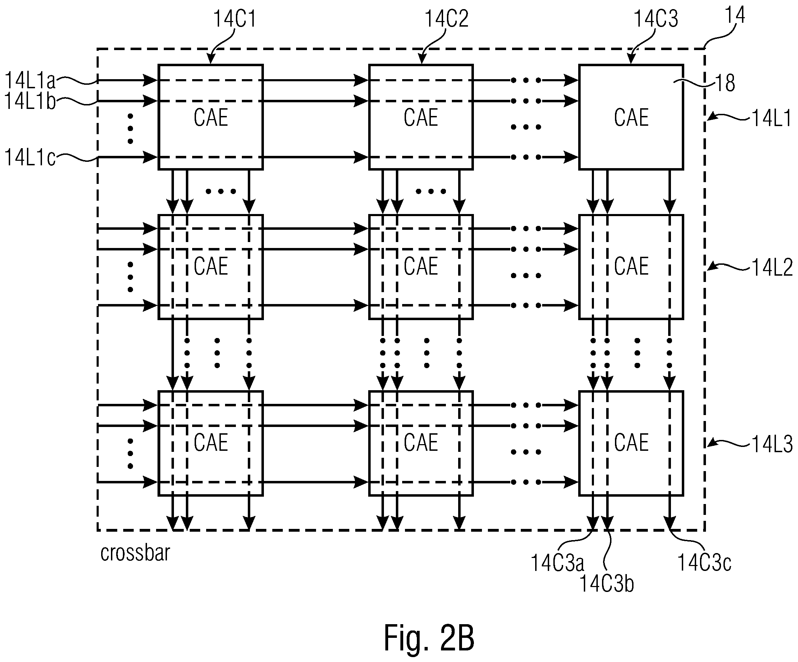

At the input 12i, digital to analog converters 12 DAC are arranged. Analogously, at the output analog to digital converter 12 ADC may be arranged. Here a plurality of DACs (cf. 12 DAC) and/or ADC (12 ADC) may be used for a plurality of rows 14L1, 14L2 and 14L3 and a plurality of columns 14R1, 14R2, 14R3 respectively, as shown by Fig. 2b. The rows 14L1, 14L2 and 14L3 and the columns 14R1, 14R2 and 14R3 represent the structure of the crossbar 14.

Optionally, the analog compute core may comprise a multiplexer 16 (multiplex fabric) at the output between the crossbar 14 and the ADCs 12 ADC. For example, one or more multiplexers (multiplexer fabric) are used for all columns 14R1, 14R2 and 14R3. Additionally or alternatively one or more multiplexer at the input of the CAEs or AWEs of crossbar (e.g. as part of the crossbar), e.g., between the DACs 12 DAC and the crossbar 14 may be used as well (not shown).

As discussed above the crossbar 14 is structured in columns 14C1, 14C2 and 14C3 and rows 14L1, 14L2 and 14L3. A plurality of rows 14L1a, 14L1b and 14L1c as well as a plurality of columns 14C3a and 14C3b, 14C3c may be grouped to CAEs. Here, just one CAE is discussed at the crossing of the row 14L1 with the column 14C3 or wherein at each crossing a CAE may be arranged. The CAE is marked by the reference numeral 18 and also referred to as CAE (crossbar area entity 18).

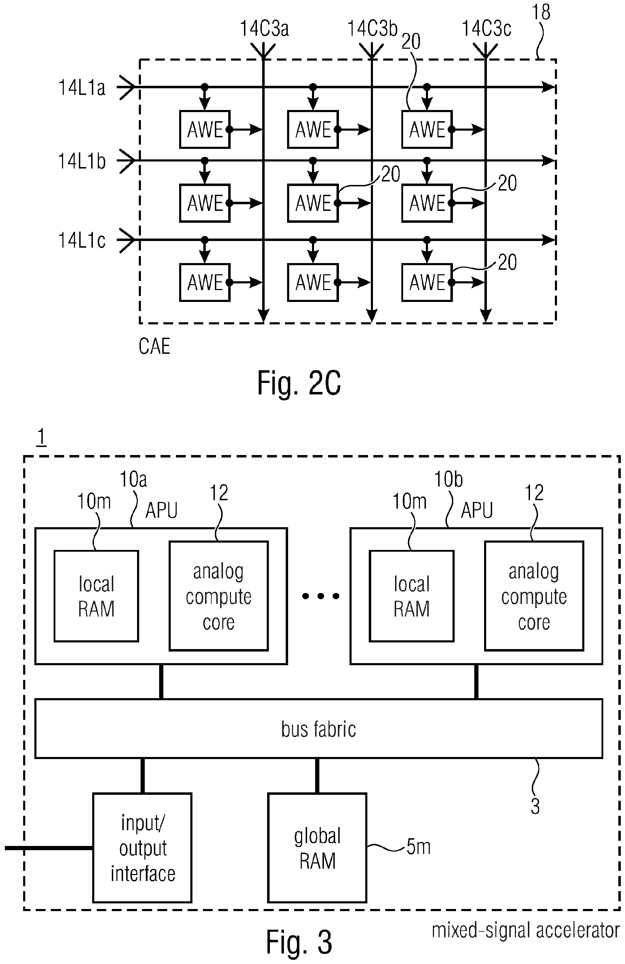

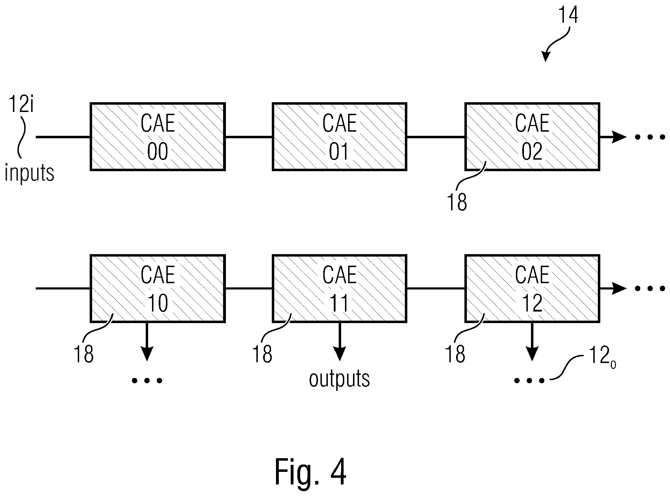

Starting from this the crossbar 14 as part of the compute core 10 may be described as follows: instead of multiple PEs that are connected with each other and with inputs and outputs, the computer resource system consists of an analog crossbar 14 with DAC (digital-to-analog converters) 12DAC at its input 12i, a multiplexer (MUX) fabric 16 and ADCs (analog-to-digital converters) at its output 12o. The whole analog circuit 12 is referred to as compute core. Diving into the crossbar in Fig. 2b or 4, it can be seen that it is made up of multiple crossbar area entities 18 (CAEs), which may be identical in structure. Simplified, each CAE consists of column lines/signals and row lines/signals and analog-weight-emulators (AWEs) connecting them as shown in Fig. 2c.

Fig. 2c shows one CAE 18, where the three columns 14L1A, 14L1B and 14L1C cross with the three columns 14C3A, 14C3B and 14C3C. At each crossing between the columns and columns a so-called synapse node 20, also referred to as analog-weight-emulator AWE is arranged. This means that the three rows 14L1A to 14L1C crossing the three columns 14C3A to 14C3C cross at nine positions, so that nine synapse nodes 20 are used.

The role of the CAE 18 attempts to assemble not to large of a number of AWEs 20 and control them. Tiling a full crossbar 20 into many CAEs 18 allows to use the available very large number of AWEs 20 (in the aforementioned example: 256 x 64 = 16,384 AWEs per crossbar) more flexibly. For instance, if the computation of an ANN layer requires only 8,000 AWEs, then only half of the CAEs are configured for this layer, while the other half can be configured for computation of one or more other layers.

An AWE or synapse node can be considered oversimplified as a programmable conductance 22 or programmable resistor 22.

According to the current weight G in the AWE 20 and the input voltage V coming from a row line, it produces a current I according to Ohm's law as I = G*V and outputs it towards the column line. According to Kirchhoff's law, then all the currents output by all AWEs 20 connected to the same column line simply add up. Thus in essence, an AWE 20 can carry out a MAC operation - but completely in analog with a very simple multiplication circuit and a quasi "for-free" adder. It is these analog computations that make mixed-signal accelerators extremely energy-efficient for ANN calculations - much more efficient than digital accelerators. Moreover, an AWE 20 is markedly less complex and smaller in silicon area than a PE thanks to its simple circuits. In other words: the same chip area can host many more AWEs than PEs. In other implementations, the AWE is realized with programmable current sources instead of programmable conductances.

While there are different strategies, what kind of value is stored inside a digital PE (could be a weight, an input value or a partial sum), it is in most systems a weight stored inside an AWE 20. This makes the dataflow inside an analog compute core less flexible, but simpler and more efficient: weights are loaded over dedicated buses into the compute cores (not shown in the figures), then the weights are re-used temporally for many different input values, which are simply represented by voltages on the row lines and are thus input to many AWEs 20 in parallel. For each input value, the AWEs produce an output value, which are summed up along the column line and produce a final result per column (which is then fed to multiplexer fabric and an ADC 12).

However, even in mixed-signal accelerators 1, storage 10m and 5m and part of the data flow remains digital. Thus, behind the ADCs, digital buses move the output values to some storage (block RAM), and these outputs serve as the inputs to the next ANN layer, when they are read from storage again and moved to the inputs of an analog compute core. For higher performance (in terms of computations per second), multiple APUs 10a, 10b (Analog Processing Units that comprise besides the analog compute core also local RAM and some more digital logic) can be combined together to form one mixed-signal accelerator - see Fig. 3. This moreover makes the accelerator more flexible and scalable, i.e. it is relatively simple to produce a dedicated ASIC that is optimized for a complex application A (with many APUs) and another one for Application B (with, e.g., just one or two APUs) from the same accelerator hardware design. Moreover, daisy-chaining multiple APUs 10a, 10b behind each other allows pipelining/streaming of output data from one APU directly to the input of the next APU. This approach saves memory (as activations do not have to be stored temporarily), latency and energy (because fewer memory accesses and less data movement is needed).

As discussed above, memory size is still a problem, since it causes increased costs and increased chip space. Additionally, the energy consumption for accessing memory is high, when considering flexible memories like volatile memories (e.g. SRAM) as well as when considering non-volatile memories (e.g. MRAM). Consequently, the selected memory or to be more general, the selection of the way to storing the weights to be used in the AWEs 20 plays a significant role for all relevant parameters likes costs, chip array, etc. Consequently, every time a tradeoff between costs, flexibility, energy consumption and performance has to be found. This becomes more important, since for different use cases, the situation is different. Below, the transfer learning for transfer-learned neural networks and sharing layers/weights across multiple use cases will be discussed.

Transfer Learning: Transfer learning as the name suggests refers to use the knowledge acquired in one task in another related task to enhance performance (source: https://ieeexplore.ieee.org/abstract/document/9134370?casa_token=muWSDv9dlHsAAAA A:PjU7gby7LhRgUy3cq6_iCrkXu3UI9SrenujW68hzFkCmK8NfXBpMDQerHVGzcugkMue cjPT7eUc). Transfer learning is a wide term but the patent is mainly concerned with Transfer Learning within the field of ANNs. In this field, the first layers can be trained with some well available database for a certain domain (e.g. Image classification) and fix these in the form of hard-wired circuit on the chip. Then some few layers can be added and trained for the actual (but small) dataset for a task that is related to the domain (e.g. MRI images classification). Mostly, only the newly added layers are trained with the new but small dataset. However, sometimes the first layers are also tuned "a little bit" (called "fine-tuning" - maybe not train all weights) [*].

Shared Layers: This is the case in systems where there are multiple tasks requiring multiple NNs and where some NN layers can be shared between them. These shared layers can be fixed to ensure efficiency. I.e the task-agnostic layers (e.g. feature extractor) is fixed and other task-dependent layers are loaded on demand into the configurable accelerator parts. E.g. Fixed language-agnostic layers for a multi-lingual model followed by language-specific layers. Source: https://ieeexplore.ieee.org/abstract/document/ 6639084?casa token=7XYE8IE61uUAAAAA:3PBdKB96AAecoEY9IZFVesQQbJ0BuaMG hnXf n-1FfcVSWdTOzBe4aUDvJHj3wRaQF9fx1MRXrl; E.g. Shared layer in a bigger system. Source: https://arxiv.org/pdf/1901.11504.pdf; E.g. Language understanding can be split into language-specific, speaker-specfic and core (shared) layers. The last one can be fixed on the chip while the other 2 can be configured for each speaker and target language. Source: https://ieeexplore.ieee.org/stamp/stamp.jsp?tp=&arnumber=7472737

Domain Shift Adaption and Task Adaption: for on-device training, e.g. adaptation to a an individual speaker, where only the last layers are trained and updated (and rest could be hard-wired). Source: https://ieeexplore.ieee.org/abstract/document /6854824?casa token=ZC7ng5Oxq7MAAAAA:UjYT3SJJFPU7pXSIdHZexKScCdc1itVbN IpaZ9-9hQpLn0XQcP3rb6VGf9GoP5-5sCmb8df22k

Transfer Learning, as described before, enables the implementation of fixed weights, meaning that they don't require programmability. Therefore, these fixed weights, including their respective configurations like the layers' input size or kernel dimensions, can be hardwired in silicon, or alternatively, the weights are hard-wired while the configuration can be made programmable.

In such a transfer learning use case, the fixed weights never change, while the rest of the weights is to be programmable after chip production.

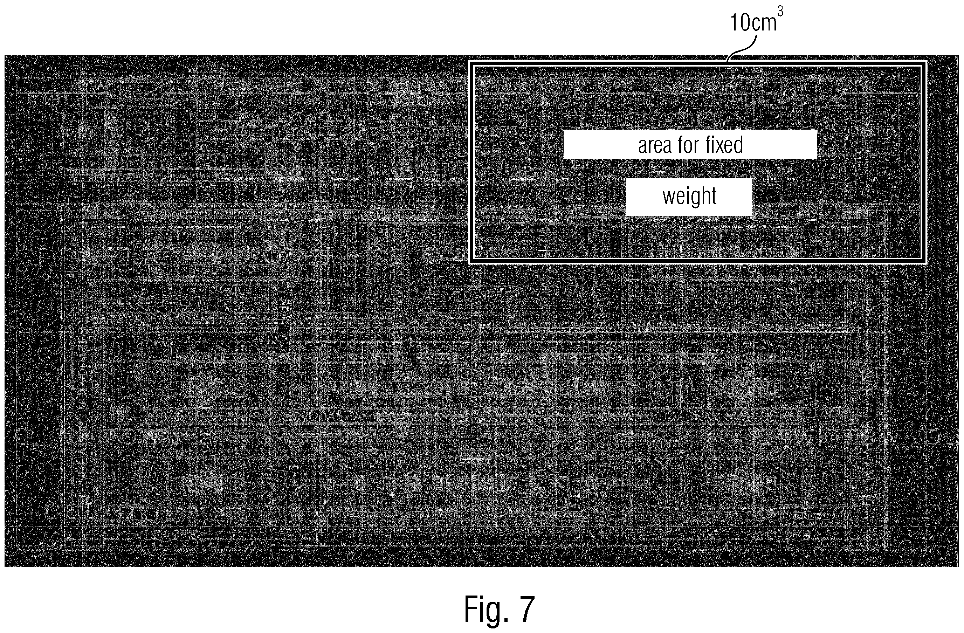

Fig. 7 impressively shows the area reduction of the synapse circuit if fixed weights, i.e. hardwired implementation, is used in comparison to the area used for a fully programmable synapse circuit using SRAM cells as weight memory. As can be seen, the area reduces to approximately 20% of the original area.

The initial area reduction can be exploited in multiple different implementations. Following sections will describe the possible solutions.

Embodiments of the present invention address the described problem by using a synapse node 20 which is increased in its functionality. It is usable in at least two different modes M1 and M2 or M1 and M3. For example, the two first synapse modes M1 and M2 are adapted to have access to different kinds of memories. For example, M1 may have access to a fully flexible weight memory like a SRAM, while M2 enables access to an offline configurable weight memory, like an NV-RAM. In a third mode M3 the weights are fixedly stored, hardwired, for example directly in the synapse entity 20'. For example, a hardwired resistor may be used. Preferably, mode M1 and M3 are combined to an embodiment or alternatively mode M2 and M3. Of course it is also possible that mode M1 and M2 are combined. According to a further embodiment, modes M1, M2 and M3 are combined. The combination of at least two modes out of the three modes M1, M2 and M3 has the purpose to combine the advantages of the different ways of storing weights, while avoiding the disadvantages.

According to embodiments, it is possible, e.g., by use of a controller to switch between the two modes or in case of three available modes, between the three modes. For example, the switch may be performed dependent on the use case. Additionally, the entire array of AWEs 20/synapse modes 20 can be subdivided into different CAEs 18, wherein different CAEs may be operated using different modes.

Below, features of the embodiments will be discussed in detail. Before discussing these features, a definition used for the different concepts of the computational elements/cores will be given.

Weights can be stored in
1. SRAM or DRAM → fully flexible / programmable at run-time
2. Non-Volatile (NV-) RAM (memristors like MRAMs, PCMs, RRAMs, FeFETs) → configurable offline (not at run-time)
3. a fixed / hard-wired circuit → cannot be changed after chip-production

Note, changing the NN topology might cause that (a) the weights change (because other hyper-parameters with the same weights does not make sense) and (b) the compute core's (layer-, input-, batch-) instructions change (which more or less correspond to the hyper-parameters).

Flexible (programmable) core: This is a fully flexible core that allows to change the NN topology as well as the weights during run-time.

Configurable core: This is a fully configurable core that allows to change the NN topology as well as the weights offline (very rarely and not during run-time). This would use NV-RAM for the weights. Changing the (SRAM-stored) compute core instructions during run-time does not make sense.

Partially flexible / configurable core: This is a partially flexible configurable core that does not allow to change the NN topology but allows to change the weights either during run-time (e.g. from one layer to the next one) or only offline (very rarely and not during run-time).

Fixed (Hard-wired) core: This is a completely fixed core that does not allow to change the NN topology or the weights during run-time or offline.

| | Type of weight storage | Change of weights | Change of NN topology |
|---|---|---|---|
| Flexible (programable) core | SRAM, DRAM | Run-time | Run-time |
| Configurable core | NV-RAM | Offline | Offline |
| Partially flexible / configurable core | SRAM, DRAM / NV-RAM | Run-time / Offline | No |
| Fixed (Hard-wired) core | fixed | No | No |

Below, a synapse implementation with fixed weights (cf. mode M3) will be discussed. According to embodiments, it is possible to use single fixed weights.

In case of a single fixed weight used as synapse circuit, each synapse circuit contains exactly one weight value which cannot be changed. This solution is the least area consuming but also the least flexible solution. A potential use-case would be the implementation of a very big layer, where the synapse must be as small as possible to reduce the influence of parasitic circuit elements.

Additionally or alternatively multiple fixed weights may be used or combined:
Combining multiple fixed weights in one synapse circuit is possible by selecting the currently required weight through multiplexer circuits and select signals. For instance, the same synapse circuit could at first be used for processing Layer 1 with the fixed weights associated with Layer 1, then the multiplexers are switched to select the fixed weights of Layer 2, and then the processing of Layer 2 can be conducted in the same synapse circuits.

This solution has the benefit of reusing the framework circuitry of a compute core although it reduces the maximum throughput. Therefore, possible use cases are NNs executed on a low inference rate with medium sized kernels and high area restrictions.

According to embodiments, the synapse mode M3 uses a synapse circuit 20CM3 having one or more fixed and/or hardwired circuits. In case of multiple fixed weights which are combined the hardwired circuits may be combined using switches (not shown) which are controllable using a selection signal.

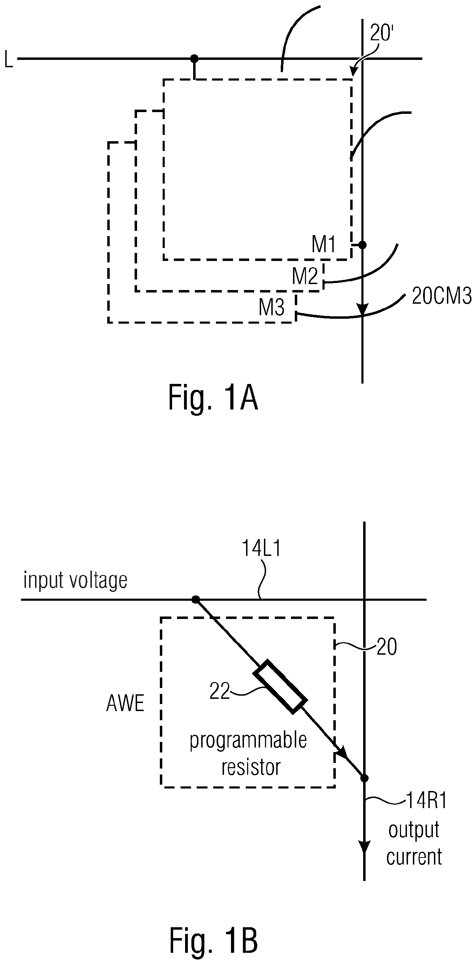

According to further embodiments, a partial configurable weight is possible, e.g., when using mode M1. Here, the synapse circuit may comprise a programmable resistor 22 as shown by Fig. 1B.

This solution combines one or multiple flexible weights stored in SRAM with one or multiple fixed weights. The currently used weight is selected through a multiplexer driven by select signals. In this case, flexibility requirements are still satisfied while the benefits of reduced area in case of transfer learning are still exploited.

Additionally or alternatively, a combination with NV-RAM (memristor) is possible. Here a programmable resistor 22 in the synapse circuit can be used as well (cf. Mode M2).

In all previous described weight implementations, the SRAM or DRAM cells driving the flexible weights can be replaced by NV-RAM (memristive devices like MRAM, RRAM and others) storing offline-configurable weights. Such solutions provide flexibility whilst the area overhead of the SRAM/DRAM cells is removed which might lead to most flexible and yet area efficient solution.

Alternatively, the NV-RAM cells could complement the SRAM/DRAM cells, i.e. a multiplexer can select between either of both.

Below, the combinations which are pickable for each single AWE 20 will be discussed.

Overall, according to embodiments the following memory means are possible to be used *for each single A WE:*

| **Fully flexible weight in SRAM / DRAM** | **Offline-configurable weight in NV-RAM** | **Fixed (hard-wired) weight** |
|---|---|---|
| One or multiple | One or multiple | |
| One or multiple | | One or multiple |
| | One or multiple | One or multiple |
| One or multiple | One or multiple | One or multiple |

According to embodiments, it is possible to use multiplexers to select one among the multiple available weights per AWE for the current use, i.e., for each mode.

According to embodiments, the mixing of different degrees of configurability within one compute core is possible. For example, a single compute core may contain a mixture of different AWEs, specifically a mixture of AWEs of the following 7 types:

| **AWE type** | **Fully flexible weight in SRAM** | **Offline-configurable weight in NV-RAM** | **Fixed (hard-wired) weight** |
|---|---|---|---|
| 1 | One or multiple | | |
| 2 | | One or multiple | |
| 3 | One or multiple | One or multiple | |
| 4 | | | One or multiple |
| 5 | One or multiple | | One or multiple |
| 6 | | One or multiple | One or multiple |
| 7 | One or multiple | One or multiple | One or multiple |

For instance (but not excluding other options), the compute core may be split up into multiple CAEs, where each CAE has AWEs of one type.

The advantage of this mixture of different AWEs is that a single compute core can be used to process multiple layers, where Layer 1 is processed on a subset A of the compute core's CAEs, Layer 2 on a subset B (need not be disjoint to A), etc., and where some layers use fixed weights (never to be updated), some offline configurable weights (can receive a software update) and some flexible weights (if weights have to be exchanged during an inference in order to re-use the remaining circuitry - e.g. if Layer N and Layer M sequentially use the same SRAM in the AWEs to store their different weights).

When combining, e.g., fixed and flexible weights in a core with the possibility to switch between the two sets of weights, one synapse circuit would contain two weight values where one is programmable, and one is hardwired. In this case, the area of one synapse circuit would increase by approximately 25% compared to a single-weight flexible synapse circuit, while it holds two weight values. Therefore, in comparison to a synapse circuit containing two fully programmable weights, the area would be reduced by 75%.

Note that even for fully-fixed cores, fine tuning of the fixed core can be achieved by adding few fully flexible or offline configurable parameters (not weights) into the fixed layers such as bias, scaling etc.

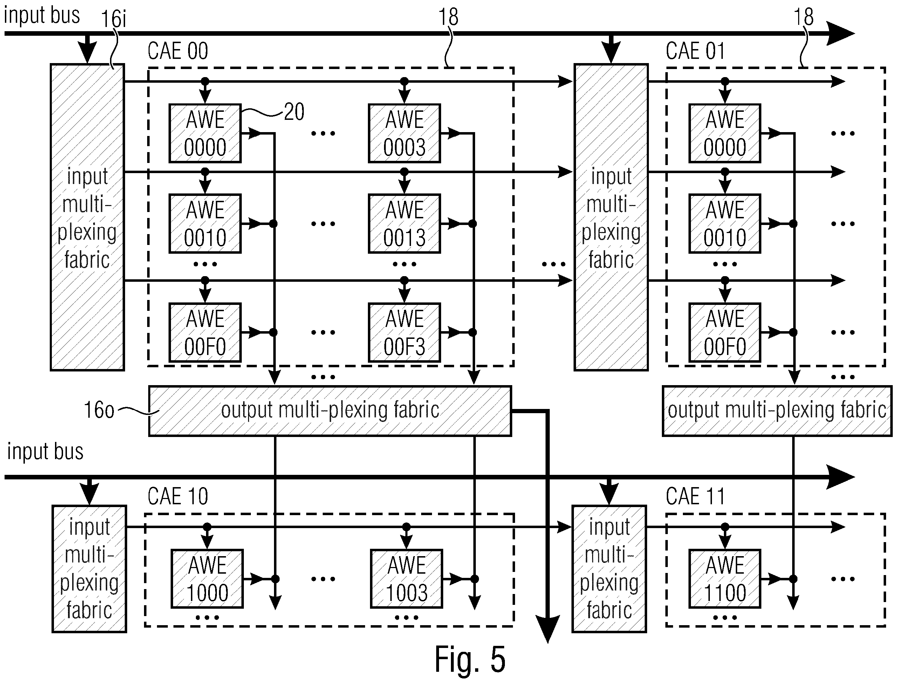

The below embodiments refer to the basic structure of the crossbar 14 using the synapse nodes grouped to CAEs 18 as illustrated by Fig. 4. Starting from this structure, Fig. 5 illustrates a more detailed view. Here a plurality of CAEs are used, wherein each comprises a plurality of AWEs 20. Each CAE comprises an input multiplexing fabric 16i and an output multiplexing 16o. This structure enables that within one crossbar different modes may be used in parallel.

According to embodiments the following possible accelerator implementations are possible:
- combination of fixed offline configurable and flexible cores or mixed cores
- mixed configurable cores
- heterogeneous core size using fixed cores.

According to embodiments, the combination of fixed, offline configurable and flexible cores or mixed cores as follows:
A first exploitation of transfer learning using fixed weights can be achieved by implementing a mixture of fixed, offline-configurable and flexible compute cores, or compute cores with a mixture of fixed, offline-configurable and flexible weights, in a single accelerator. Up to now, all compute cores in state-of-the-art DNN accelerators are fully programmable including layer parameters and weight values, or they are fully fixed (e.g. for a fixed digital accelerator - not using analog crossbar arrays - see [mir22], [mir23a], [mir23b]). In case of transfer learning, some of these cores might be implemented using fixed weights and configurations, which drastically reduces the area consumption. The fixed compute cores (or fixed parts in the cores) will hold the layers which are not retrained during the optimization of the NN for the current use-case or the adaptation of the NN for a new use-case, while the offline-configurable or flexible cores (or the offline-configurable or flexible parts in the cores) will hold the updated/retrained layers. The update/retraining can than include changes in weight values as well as layer and network structure.

Using fixed cores or fixed parts in the cores is beneficial in case part of the NN is not changed during update/retraining. For example, a NN containing 75% fixed weights, while only 25% are flexible, executed on an accelerator containing 4 compute cores would enable to implement 3 out of the 4 cores with fixed weights.

Besides the reduction in area, using fixed cores or fixed parts in the cores the reduced core dimensions also reduce parasitic capacitances and resistances created by the interconnections between the synapse array (crossbar) the neurons (implemented by ADCs). The reduction in parasitics, especially in case of capacitance, also leads to a potential reduction in energy consumption due to the reduced charge required to charge the parasitic capacitance. The reduction of parasitic resistances potentially also improves the computation accuracy as less voltage drop occurs on the interconnections.

Furthermore, fully-fixed cores do not require any logic and memory for configuration and weight loading, further reducing the area and, due to less circuitry, also reducing the leakage (quiescence) current.

According to embodiments, mixed-configurable cores are usable as follows:
Mixed-configurable cores (with a mixture of fixed, offline-configurable and flexible weights) can be used in two ways: All cores are mixed-configurable and only some cores are mixed configurable. The first option, where all cores can switch between, e.g., fixed and flexible weights, would be used if approximately half the weights are retrained in transfer learning, leading to optimal utilization of both fixed and flexible weights. In contrast, the second option would be used for NNs like described above, where most of the weights are fixed and only a small subset is retrained or vice versa.

One advantage of mixed-configurable cores, compared to fully fixed cores, is the reuse of the existing core infrastructure, including the input and output memory, state-machines, and configuration registers, which reduced the overhead of digital control logic.

According to embodiments, heterogeneous core sizes using fixed cores can be used as follows.

Flexible cores are dimensioned to accommodate the biggest possible kernel dimensions for a given set of use case NNs. In most deployment cases, this will lead to unused hardware and therefore underutilization for the compute core. Using fully fixed cores, the required core size is known prior to final implementation. Therefore, the fixed cores can be dimensioned in terms of number of rows, columns and ADCs to the requirement of the layer it should implement. This further reduces the area of the core and therefore potentially also the energy consumption.

To summarize, according to embodiments, each AWE 20 could contain a single option or a mixture of fixed, offline-configurable or flexible weights. Each crossbar array entity can use different types of such AWEs. Each crossbar or compute core can use different types of such AWEs or different types of crossbar array entities according to embodiment, and finally an accelerator can use different types of such cores according to further embodiments.

Below a comparison to the prior art for discussing the advantages will be given.

By contrast to the analog case described above, freezing weights is rarely done in digital accelerators (except [mir22], [mir23a], [mir23b] and [isi20]). The reason is that in a digital PE, the dominant operation is the multiplication of a weight with an input and adding the result to some other value (either internally stored or from a second input). The number of PEs is relatively small compared to the number of AWEs, e.g. the very powerful digital accelerator DaVinci Max from Huawei possesses 8192 PEs [Hua20], while already the relatively small mixed-signal accelerator ADELIA v2.0 from Fraunhofer IIS possesses 6*16384 ≈ 100 000 AWEs. Accordingly, a PE in a digital accelerator has to process on average many more weights per inference than an AWE in a mixed-signal accelerator with analog crossbars. Freezing part of the weights would hence mean in a digital accelerator, that the digital multiplier and the addition circuits will have to be implemented completely flexible anyway, in order to allow for multiplications (and additions) with the multiple weights per PE. The freezing of weights would just allow to store these weights in read-only-memories ROMs instead of RAMs - either inside the PEs or in local or global block ROMs. Savings in silicon area and thus in chip cost are relatively low when replacing part of the block RAMs by *additional* block ROMs in a digital accelerator. This is the reason why freezing part of the weights does not make much sense and is not used much in digital accelerators.

The digital accelerator of [mir22], [mir23a], [mir23b] is optimized for a very specific single use case and associated NN for object detection in an image, such that the benefits described in the publications are probably much due to fitting the accelerator architecture tightly to this specific use case and topology of the NN, e.g. by fixing the layer sizes and implementing optimized data flows for this specific use case and NN, but this accelerator architecture concept is not flexible or offline configurable by any means and hence cannot be used over a complete range of multiple use cases and associated NNs.

The digital accelerator of [isi20] is a mixture of frozen compute cores and trainable compute cores. Each of the two types of compute cores is however implemented fully in parallel, i.e. for each multiplication that has to be calculated in the ANN, there is a hardware multiplier (in this publication, only power-of-two-multiplication, i.e. scaling, is used). In this case, freezing, i.e. hard-wiring, compute cores does in fact reduce the required chip area and power consumption. However, such a fully parallel implementation (the authors state "fully-pipelined hardware") is usually comparatively large compared to using PEs (see above) and hence prohibitive for most use cases. This accelerator does not allow the use of a combination of hard-wired weights, fully flexible ones and offline configurable weights in the same compute core. Moreover, the replacement of multipliers by scalers in the publication reduces the accuracy of a given ANN drastically, thus the ANN size has to be increased to compensate, which in turn requires more HW.

By contrast, in analog crossbars, much fewer weights share an AWE such that the fixed weights can be realized quite simple and with little overhead (no additional block ROMs needed) as described above. Since the fixed weights can be stored inside the AWE, the energy for "reading" the (fixed) weight and moving it to the input of the (analog) multiplication circuit is very low. On the other hand, for digital accelerators, the energy for reading a (fixed) weight from a block ROM and moving it to the input of the (digital) multiplication circuit is almost as high as for programmable weights in a block RAM.

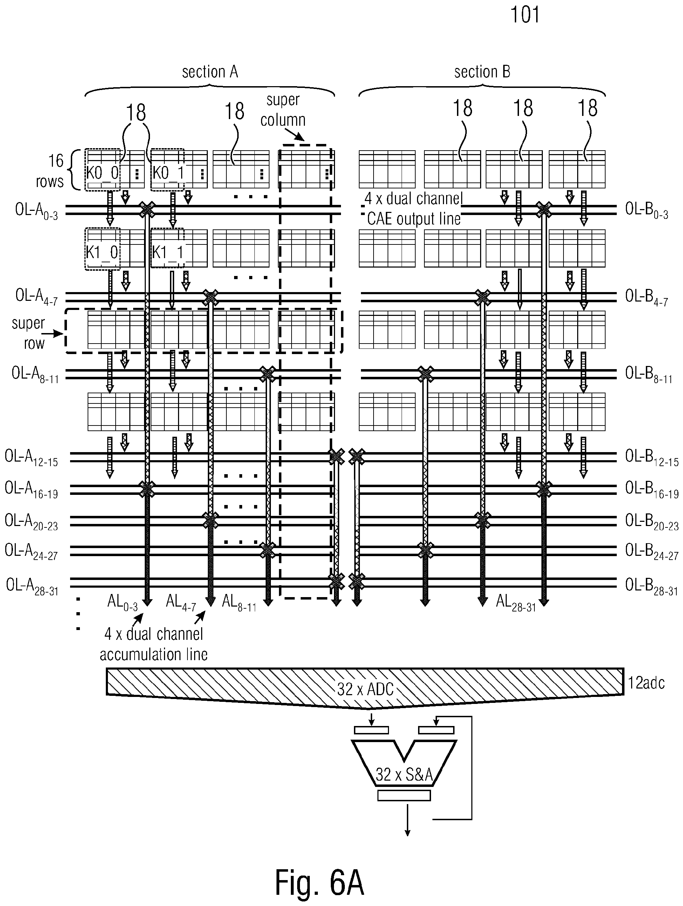

Starting from the implementation of Fig. 5, the more detailed example is shown in Fig. 6a. Fig. 6a shows a crossbar array 10' being divided into a section A and section B, where the output rows are marked OL-A₀ to OL-A₃₁ for section A and OL-B₀ to OL-B₃₁ for section B. Each section may be subdivided into four dual channels per CAE (cf. CAE 18), wherein the four dual channel CAE output rows are highlighted. The output rows of the columns are marked by AL₀ to AL₃₁. In Section A, a super row, i.e. a row constituted by CAEs, and super column, i.e. a column constituted by CAEs, is highlighted.

As can be see, the crossbar comprises 32 output rows and output columns, wherein the input rows and input columns are not highlighted. For example, for the input 16 rows may be used for each dual channel CAE output. Note, the output columns AL₀ to AL₃₁ are then forwarded to an ADC arrangement having 32 ADCs (Cf. 12ADC).

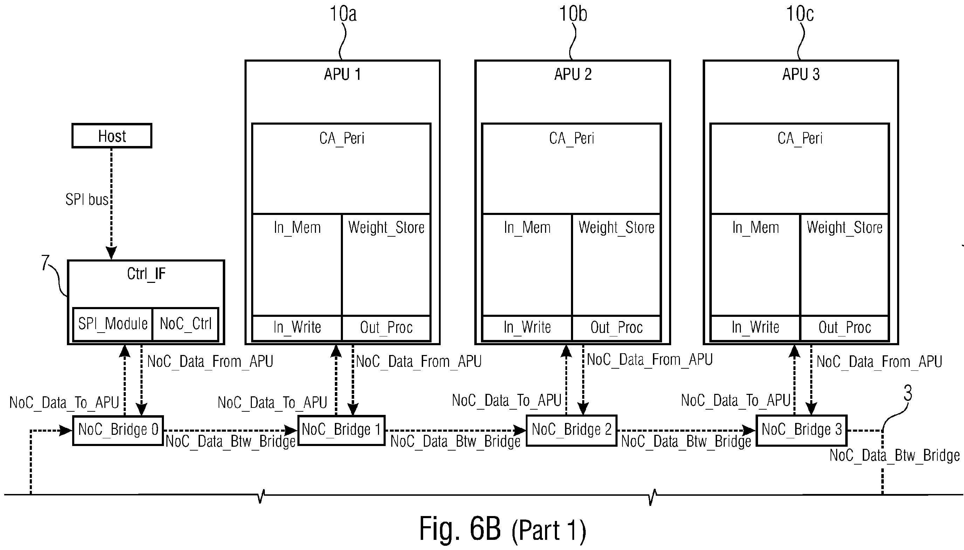

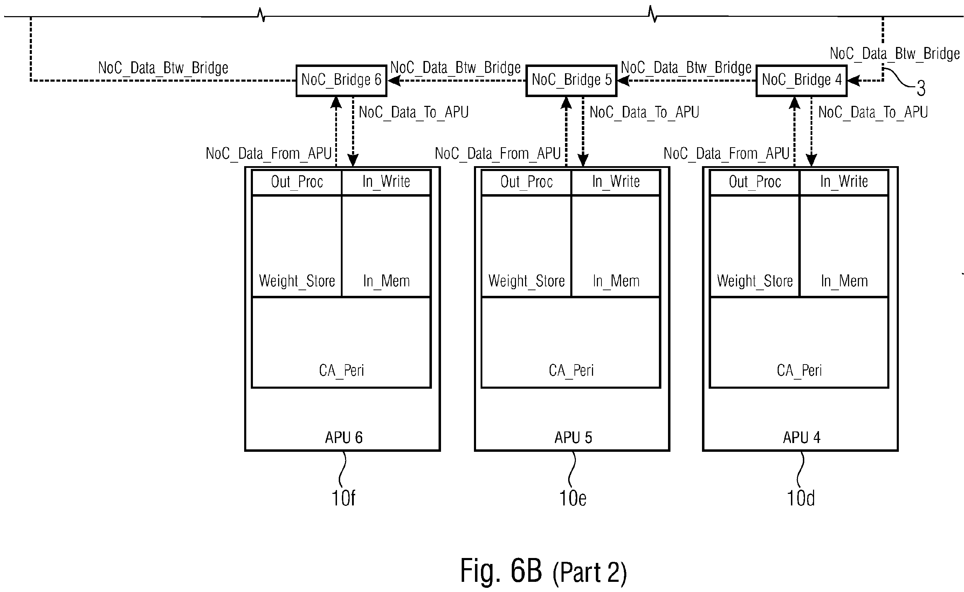

Fig. 6b shows an implementation of the block diagram of Fig. 3 with more details. Here, the APUs 10a, 10b, 10c, 10d, 10e and 10f all communicating with the bus 3 via Network-on-Chip NoC bridges. Additionally, a controller 7 for controlling the bus 3 and/or the APUs 10a to 10f is shown.

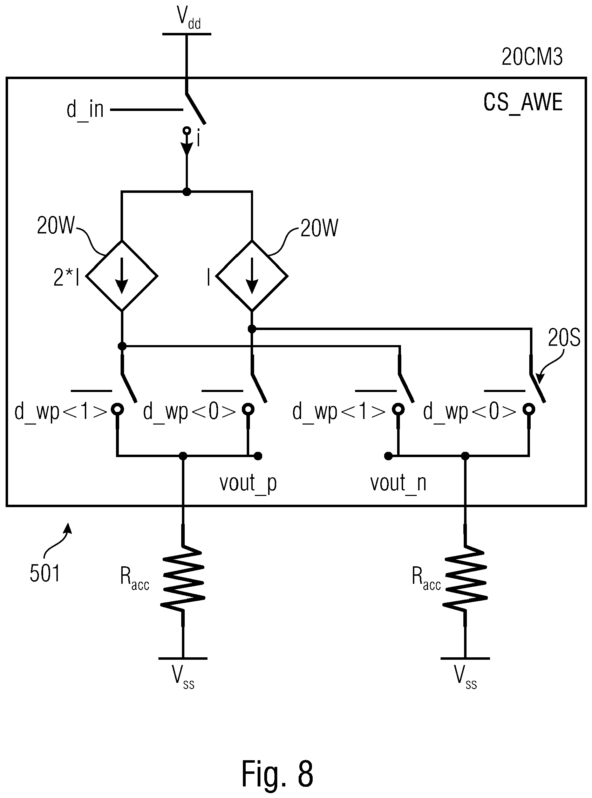

Fig. 8 shows exemplarily an implementation of (fully flexible / offline configurable / fixed) weights. This circuit 20 CM3 comprises two constituent weights 20W, namely 2I and I. By use of the switch network 20S, the constituent weights 20W can be selected individually or combined. Note the shown circuitry may be used for all modes. For the case that just hard-wirde weigth are used (e.g. without multiplexer) the complexity may be reduced. For example if d_wp<1 > nd d_wn<1 is set to zero, a current supply can be avoided.

Below, different use cases according to different embodiments will be discussed.

According to an embodiment, few-shot learning/efficient ML chip for a specific domain is possible.

In this scenario, the NN will be trained in a certain domain or task (image, audio ...etc.) and fixed in HW. The fixed NN is then used as a preprocessing model that generates features to be used for the task at hand in the configurable parts of the accelerator or to adapt to new tasks (preferably within the same domain) defined by the users. Source from gesture recognition: https://ieeexplore.ieee.org/stamp/stamp.jsp?tp=&arnumber=9422807

According to embodiments, shared processing among related tasks is possible. E.g. for speech recognition two or more NNs can be designed with shared layers and trained on 2 more languages, the shared layers are then fixed on the chip and only the language-specific layers can be configured according to the required language. The example can be extended to reduce communication overhead. E.g. user has a system with German language and before traveling to UK, they update it and replace the German specific-layers with English ones. Now this requires few MBs instead of GBs.

According to embodiments, 2-Stage NNs is possible. The is the case in systems with 2 or more DNNs where first DNN output is used to trigger the execution of the 2^{nd} DNN. In this case, the first DNN can be hard-wired for efficient always-on processing while the 2^{nd} DNN can be configured according to the application. E.g. in speech tasks: Voice activity detection NN can be fixed while Keyword spotting can be programmed as desired. E.g. for a selectable language or a different set of key words.

According to embodiments, flexible ASIC design is possible. Use case: customer can have a not too expensive chip by having the first layers fixed, but can still have flexibility to update the last layers later. So he can choose the degree of flexibility he needs (now or later on) by deciding how much is hard-wired and how much programmable.

According to embodiments, a personalization is possible.

This task is related to domain adaptation where the chip has a fixed NN to perform a certain task and the flexible layers are used to adapt to the user. E.g. speaker adaptation or adapting to lighting conditions. In addition, the task can be adapted. E.g. a system trained to do gesture recognition can be adapted by the user for their own gestures by training/adapting the flexible cores on the chip.

Embodiments provide a (generic) crossbar, where at least one synapse node (AWE) holds at least two memories out of the three options to store weights: (a) Flip-Flop/Latch/SRAM/DRAM cells, (b) Non-Volatile RAM cells, (c) hard-wired fixed weights.

According to embodiments the circuitry of an AWE is designed to be able to select one out of *multiple* fixed weights, NV-RAM memories, and/or SRAM memories.

An embodiment provides a crossbar having one or multiple control signals for the selection between the different memory types in an AWE, and the selection between multiple fixed weights, NV-RAM memories, and/or SRAM memories in an AWE.

Another embodiment provides a (generic) crossbar which contains at least two different types of AWEs (table from above)

| **AWE type** | **Fully flexible weight in SRAM/DRAM/latch/flip-flop** | **Offline-configurable weight in NV-RAM** | **Fixed (hard-wired) weight** |
|---|---|---|---|
| 1 | One or multiple | | |
| 2 | | One or multiple | |
| 3 | One or multiple | One or multiple | |
| 4 | | | One or multiple |
| 5 | One or multiple | | One or multiple |
| 6 | | One or multiple | One or multiple |
| 7 | One or multiple | One or multiple | One or multiple |

According to embodiments the crossbar is split into tiles (CAEs) which each has one or multiple control signals for the selection between the different memory types in an AWE, and the selection between multiple fixed weights, NV-RAM memories, and/or SRAM/DRAM memories in an AWE.

Another embodiment provides an analog or mixed-signal accelerator for ANN inference, that contains a mixture of purely hard-wired crossbars, purely NV-RAM-based crossbars, purely SRAM/DRAM-based crossbars, and mixed-configurable crossbars according to the above claims (i.e. at least one AWE in the crossbar has a mixture of memory types, or there is a mixture of AWE types in the crossbar). For example, at least one crossbar has different dimensions (number of columns and/or rows) than one other.

An embodiment provides deployment and running inference of ANN into any analog or mixed-signal accelerator according to the above claim by dividing the ANN computation into two or more crossbar types mentioned in the above claim (purely hard-wired crossbars, purely NV-RAM-based crossbars, purely SRAM/DRAM-based crossbars, and mixed-configurable crossbars).

According to embodiments the division is layer-wise (i.e., one or more layers are fixed and run on the hard-wired crossbar, one or more layers are offline configurable and run on the NV-RAM-based crossbar, and/or one or more layers are fully flexible and run on the SRAM/DRAM-based crossbar).

According to embodiments the ANN layer (one or more) is divided into fixed, offline-configurable and/or flexible computation and deployed into one mixed-configurable or into two or more crossbar types of purely hard-wired crossbars, purely NV-RAM-based crossbars, purely SRAM/DRAM-based crossbars, and mixed-configurable crossbars. For example, the first x out of N output channels of a layer are fixed, while the remaining N-x are flexible.

An embodiment provides an optimization algorithm, that given 2 or more UCs, optimizes the power consumption jointly by utilizing the fixed and offline-configurable weights in the accelerator.

Another embodiment provides a training method that is given a partitioning of the parameters - like weights - of an ANN into two parts: a shared part and an individual part, and that trains the shared part jointly over multiple use cases / data sets, while the individual part is trained individually and separately for each use case / data set.

Another embodiment provides a mapper/scheduler/compiler tool that is given the fixed, offline-configurable and/or flexible parts of an ANN and that then does the mapping of these parts to the fixed, offline-configurable and/or flexible components in the analog or mixed-signal accelerator.

According to embodiments the mixed-signal generator is still under development and the mapper/scheduler/compiler is used to optimize the location of the fixed components in the accelerator - i.e. the fixed crossbars or the fixed parts of crossbars, as well as the locations of the offline-configurable and/or the flexible components.

According to embodiments the locations of the fixed, offline-configurable and flexible components in the accelerator have already been determined, and where the mapper/scheduler/compiler is used to optimize the mapping of the offline-configurable and/or flexible parts of an ANN to the offline-configurable and/or flexible parts, respectively, in the accelerator.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.
[Hua20] Huawei: "DaVinci: A Scalable Architecture for Neural Network Computing", 2020, online: https://ieeexplore.ieee.org/document/8875654
[isi20] Leo F Isikdogan, Bhavin V Nayak, Chyuan-Tyng Wu, Joao Peralta Moreira, Sushma Rao, and Gilad Michael: "SemifreddoNets: Partially Frozen Neural Networks for Efficient Computer Vision Systems", 2020, online: https://arxiv.org/abs/2006.06888
[Mir22] Ivan Miro-Panades, Inna Kucher, Vincent Lorrain, Alexandre Valentian: "Meeting the latency and energy constraints on timing-critical edge-AI systems", International Workshop on Embedded Artificial Intelligence, Devices, Systems, and Industrial Applications (EAI), Milano, 19th September 2022, online: https://ai4di.automotive.oth-aw.de/imaaes/EAI-PDF/2022-09-19 EAI S2 P2-CEA IvanMiro-Panades.pdf
[Mir23a] Ivan Miro-Panades, Inna Kucher, Vincent Lorrain, Alexandre Valentian: "Meeting the latency and energy constraints on timing-critical edge-AI systems", Embedded Artificial Intelligence: Devices, Embedded Systems, and Industrial Applications, pp. 61-68, River Publishers, 2023.
[Mir22b] Ivan Miro-Panades, Inna Kucher, Vincent Lorrain, Alexandre Valentian: "NeuroCorgi: preparing the path for a low-energy and low-latency Al architecture", European Nanoelectronics Applications, Design & Technology Conference, Grenoble, 26th/27th June 2023.
[Sha16] A. Shafiee et al., "ISAAC: A Convolutional Neural Network Accelerator with In-Situ Analog Arithmetic in Crossbars," 2016 ACM/IEEE 43rd Annual International Symposium on Computer Architecture (ISCA), Seoul, Korea (South), 2016, pp. 14-26, doi: 10.1109/ISCA.2016.12.
[*] Source (timeseries): https://ieeexplore.ieee.org/abstract/document/8621990; Source (image): https://ieeexplore.ieee.org/abstract/document/9068805; Source (image): https://www.researchgate.net/profile/Srikanth-Tammina/publication/337105858_Transfer_learning_using_VGG-16_with_Deep_Convolutional_Neural_Network_for_Classifying_Images/links/5dc94c3ca6f dcc57503e6ad9/Transfer-learning-using-VGG-16-with-Deep-Convolutional-Neural-Network-for-Classifying-Images.pdf?_sg%5B0%5D=started_experiment_milestone&origin=journalDetail&_rtd=e30 %3D

## Claims

1. Processor (10) for processing an artificial neural network operation, comprising:
a crossbar (12) comprising a plurality of crossbar (12) array entities, each crossbar (12) array entity comprising at least one synapse node (20),
the at least one synapse node (20) is configured to be operated
- in a first synapse mode (m1) having one or more stored first weights, and
- in a second synapse mode (m2) using one or more second weights and/or
- in a third synapse mode (m3) using one or more fixed (stored) third weights;
wherein the first synapse mode (m1) and the second synapse mode (m2) and the third synapse mode (m3) differ from each other with respect to a storing of the one or more weights as the stored first weights or second weights or third weights.

2. Processor (10) according to claim 1, wherein the first and/or the second synapse mode (m2) are adapted to use a memory or wherein the synapse node (20) to be used with the first and second mode comprises a memory; and/or wherein the third synapse mode (m3) is adapted to use one or more fixed weights or wherein the synapse node (20) to be used with the third synapse mode (m3) comprises one or more fixed (hardwired) weights; and/or
wherein the first synapse mode (m1) and/or second synapse mode (m2) are configured to use uses a fully flexible weight memory, especially comprising SRAM cells or Flip-Flop cells or Latch cells or DRAM cells, and/or offline configurable weight memory, especially a nonvolatile-RAM; and/or
wherein the third synapse mode (m3) is used for synapse nodes using one or more fixed and/or hardwired weights.

3. Processor (10) according to one of the previous claims, wherein the synapse node (20) comprises at least a memory to be used with at least one of the first and/or second and/or third synapse modes (m2) or comprises at least two memories to be used with the first and second synapse mode (m2), wherein the two memories are of different type.

4. Processor (10) according to one of the previous claims, comprising a multiplexer configured for receiving a selection signal and for selecting a respective signal from a memory or memories of the synapse node (20) to be used in accordance to the first and/or second synapse mode (m2) and/or comprising a multiplexer receiving a selection signal to select one or a combination of at least two out of the one or more fixed stored weights; and/or
further comprising a controller for the crossbar (12) configured to provide a control signal or selection signal and to select the respective first and/or second and/or third synapse mode (m3) in accordance to the control signal.

5. Processor (10) according to one of the previous claims, wherein the crossbar (12) is implemented as a combination of a fully-flexible crossbar and/or a non-volatile crossbar and/or a hardwired crossbar or a mixed crossbar.

6. Processor (10) according to one of the previous claims, wherein the synapse node (20) to be used in the third synapse mode (m3) comprises a single fixed weight for processing a signal or multiple fixed weights for processing the signal; or
wherein the synapse node (20) to be used in the third synapse mode (m3) comprises a single fixed weight for processing a signal or multiple fixed weights for processing the signal, wherein a combination or selection of the one or more multiple fixed weights is selectable using a selection signal.

7. Processor (10) according to one of the previous claims, wherein the crossbar (12) is implemented as an analog entity; and/or
further comprising one or more DACs at the input of the crossbar (12) and/or one or more ADCs at the output of the crossbar (12) and/or one or more multiplexers at the output of the crossbar (12).

8. Processor (10) according to one of the previous claims, wherein the crossbar (12) comprises a plurality of crossbar array entities which are arranged in at least two rows and/or at least two columns.

9. Processor (10) according to one of the previous claims, wherein different array entities and/or different array entities grouped into crossbar array entities (18) are operable using different synapse modes out of the first and/or second and/or third synapses mode and especially are operable using the first or second synapse mode (m2) together with the third synapse mode (m3); and/or
wherein the crossbar (12) is configured to update and/or retrain the stored first and/or stored second and/or third stored weights.

10. Processor (10) according to one of the previous claims, further comprising a further crossbar or wherein the crossbar (12) is divided into a first part and a second crossbar array entity of the crossbar (12); or
further comprising a further crossbar or wherein the crossbar (12) is divided into a first part and a second part; and wherein the crossbar (12) and the further crossbar or the first and second part of the crossbar (12) are configured to be operated in different modes during one application and/or are of different size ; or
further comprising a further crossbar or wherein the crossbar (12) is divided into a first part and a second part; and wherein the crossbar (12) and the further crossbar or the first and second part of the crossbar (12) are used as at least two layers, especially two layer stages comprising a first layer stage where the crossbar (12) is used in the third synapse mode (m3), and a second layer stage where the crossbar (12) is used in the first or second synapse mode (m2).

11. Processor (10) according to one of the previous claims, wherein each synapse node (20) comprises at least two synapse circuits, each synapse circuit adapted for one of the synapse modes.

12. Processor (10) according to one of the previous claims, further being connected to a a mapper and/or compiler configured to map a first set trained weights for the third synapse mode (m3) into fixed-weight crossbars, crossbar array entities or synapse nodes, and/or to map a second set of trained weights into a memory or memories for the first and second synapse mode (m1, m2).

13. Method for processing an artificial neural network operation using a crossbar (12), comprising a crossbar (12) comprising a plurality of crossbar (12) array entities, each crossbar (12) array entity comprising at least one synapse node (20), the at least one synapse node (20) is configured to be operated in a first synapse mode (m1) having one or more stored first weights and a second synapse mode (m2) using one or more second weights and/or a third synapse node (20) using one or more fixed (stored) third weights; wherein the first synapse mode (m1) and the second synapse mode (m2) and the third synapse mode (m3) differ from each other with respect to a storing of the one or more weights as the stored first weights or second weights or third weights; the method comprising the following steps:
operating the crossbar (12) in the first synapse mode (m1) and the second mode and/or the third synapse mode (m3).

14. Method according to claim 13, further comprising the step of training the first stored weights and/or second stored weights and/or third stored weights; and/or
further comprising the step of selecting the first and/or second and/or third synapse mode (m3) under the optimization target of reducing power consumption and/or under the optimization target of reducing chip area/space; and/or
further comprising the step of partitioning the crossbar (12) into two parts or partitioning the crossbar (12) into two parts, especially a shared part and an individual part, or partitioning the crossbar (12) into two parts, namely an individual part and a shared part, wherein the weights in the individual parts are assigned individually and separately for each use case or data set and the shared part jointly over multiple use cases or data sets.

15. Computer program for performing, when running on a processor (10) according to one of claims 1-12 the method according to claim 13 or 14.
